# EUROPÄISCHE PATENTSCHRIFT

(11) **EP 2 123 071 B1**
(45) Veröffentlichungstag und Bekanntmachung des Hinweises auf die Patenterteilung: **02.06.2010**
(21) Anmeldenummer: 07821937.5
(22) Anmeldetag: 29.10.2007
(51) Int. Cl.: H04W 92/12, H04W 88/08

(54) **VERFAHREN, SYSTEM UND EINRICHTUNG ZUR DATENREDUKTION AUF DER ABIS-SCHNITTSTELLE EINES MOBILFUNKNETZES**
METHOD, SYSTEM, AND DEVICE FOR DATA REDUCTION ON THE ABIS INTERFACE OF A MOBILE COMMUNICATION NETWORK
PROCÉDÉ, SYSTÈME ET DISPOSITIF POUR LA RÉDUCTION DES DONNÉES À L'INTERFACE ABIS D'UN RÉSEAU DE RADIOCOMMUNICATION MOBILE

(30) Priorität: 19.12.2006 DE 102006060002
(43) Veröffentlichungstag der Anmeldung: 25.11.2009
(73) Patentinhaber: Siemens Programm- und Systementwicklung Gmbh & Co. KG, 21079 Hamburg (DE)
(72) Erfinder: BRENNER, Jörg, 22303 Hamburg (DE); BECKMANN, Steffen, 21614 Buxtehude (DE); CRAMER, Carl Mathias, 24558 Henstedt-Ulzburg (DE); DORN, Aleksej, 21244 Buchholz i.d.N. (DE); WOLFF, Florian, 22459 Hamburg (DE)
(74) Vertreter: Maier, Daniel Oliver
(86) Internationale Anmeldenummer: PCT/EP2007/061577
(87) Internationale Veröffentlichungsnummer: WO 2008/074558

(56) Entgegenhaltungen:
- EP-A- 0 797 319
- WO-A-2007/069229
- US-A1- 2002 057 653
- US-A1- 2006 154 660

## Beschreibung

### Technisches Gebiet

Die Erfindung betrifft ein Verfahren zur Reduktion der zu übertragenden Datenmenge zwischen einer Basisstation und einer Steuerungseinheit in einen Mobilfunknetz, sowie ein. System zur Durchführung des Verfahrens und eine Einrichtung zum Einsatz in diesem Verfahren.

### Stand der Technik

Moderne zellulare digitale Mobilfunknetze haben die Mobilkommunikation seit Beginn der 1990er Jahre revolutioniert. Sie haben die bestehenden analogen Mobilfunknetze praktisch vollständig abgelöst. Die modernen Standards (besonders GSM, UMTS, CDMA) ermöglichten einen Verfall der Infrastruktur- und Endgerätepreise was zu. Wettbewerb unter den Telephonieanbietern und zu niedrigen Gebühren geführt hat.
Der Wettbewerb der Infrastruktur herstellenden Firmen wurde auch dadurch gefördert, dass die Kommunikation zwischen den Netzelementen standardisiert wurde, die Schnittstellenbeschreibungen und Protokolle offen gelegt wurden und deshalb Mobilfunknetze der oben genannten Standards aus Netzelementen beliebiger Hersteller zusammengestellt werden können. Allen Mobilfunknetzen ist gemein, dass sie aus Elementen der Funkversorgung (Antennen, Basisstationen (im Falle von GSM "BTS" - Base Transceiver Station genannt), Steuerungseinheiten (im Falle von GSM "BSC" - Base Station Controller genannt)) und aus Elementen der Vermittlungstechnik (im Falle von GSM "MSC" - Mobile Switching Center genannt) bestehen. Daneben existieren verschiedene weitere Netzelemente für diverse Aufgaben, wie die Anbindung an das öffentliche Telefonsystem (PSTN), die Nutzerverwaltung und ähnliches.

Bei der Entwicklung dieser Standards wurde auf die versorgung des urbanen und ruralen Raums fokussiert, die Zellengrößen und Schnittstelle wurden auf dafür typische Entfernungen und Nutzerdichten abgestimmt.

Besteht nun der Wunsch nach Mobilkommunikation in von konventioneller Infrastruktur abgeschnittenen Bereichen wie z.B. entfernt gelegenen Inseln, Siedlungen, Flugzeugen und Schiffen, so bietet es sich an, ein komplettes Mobilfunksystem an diesen Orten aufzubauen und beispielsweise über Telefonkabel, Richtfunkstecken oder Satellitenfunkstrecken an das öffentliche Telefonsystem anzubinden. Dies ist jedoch mit sehr hohen Kosten verbunden. Im Fall des Einsatzes in einem Flugzeug stellt auch das hohe Gewicht dieser Einrichtungen ein Problem dar.

Werden stattdessen nur die unbedingt nötigen Netzelemente (Endgeräte, Basisstation) an diese entfernten Orte gebracht und die Anbindung an das restliche Mobilfunksystem über ein Übertragungssystem geführt, so stellt sich die Frage der Übertragung der Anbindung dieser exponierten Netzelemente an das restliche Mobilfunksystem. Prinzipiell ist diese Problematik lösbar, entsprechende Datenverbindungen sind problemlos an praktisch jeden Ort der Welt errichtbar.

Kommunikation zwischen Mobilfunkteilnehmern innerhalb eines solchen, abgelegenen Bereichs belastet die Verbindung zu den Steuerungseinheiten, ohne das die Übertragung von Daten, im Allgemeinen Sprachdaten bis zu den Elementen der Vermittlungstechnik erforderlich wäre.. Der dabei anfallende Datenstrom verringert die verbleibende Übertragungskapazität für Verbindungen für welche die Übertragungen auf dieser Schnittstelle unbedingt erforderlich sind. Nur Daten, welche zur Signalisierung benötigt werden, bedürfen in jedem Fall des Transports bis zu den Elementen der Vermittlungstechnik.

Gemäß dem Stand der Technik ist es bekannt, Verbindungen zwischen mobilen Endgeräten einer Basisstation (Funkstation) direkt in dieser Basisstation (Funkstation) zusammenzuschalten und damit das (unnötige) Weiterleiten der Sprachkanäle bis zu einer Steuerungseinheit (Vermittlungsstelle oder Basisstations-Kontroller) zu vermeiden.

US 2006/0154660 A1 zeigt eine "Distributed BSC", die aus einem "Remote Gateway" und einem "Central Gateway" gebildet wird. Mobilstationen sind an eine BTS angebunden, welche wiederum mit dem "Remote gateway" verbunden ist. Wenn das "Remote Gateway" erkennt, dass eine Sprachverbindung zwischen zwei Mobilstationen dieser Basisstation aufgebaut werden soll, dann wird diese Verbindung intern im "Remote Gateway" zusammengeschaltet und wird nicht über einen Satelliten-Link bis zum "Central Gateway" geführt. EP 0 797 319 A2 zeigt auch, dass auf die Nutzung eines Satelliten-Links dann verzichtet werden kann, wenn die Mobilstationen an eine Funkeinrichtung angebunden sind.

### Darstellung der Erfindung

Der Erfindung liegt die Aufgabe zugrunde, Sprachkanäle zu identifizieren, auf welchen Sprachdaten übertragen werden die zu derselben Verbindung gehören.

Die Aufgabe wird durch ein Verfahren mit den Merkmalen des Anspruchs 1, einem System gemäß Anspruch 10 und einer Einrichtung gemäß Anspruch 11 gelöst. Vorteilhafte Ausgestaltungen sind Gegenstand von abhängigen Ansprüchen.

Dem Grundgedanken der Erfindung zufolge erfüllt die in die Verbindung von der Basisstation zur Steuerungseinheit liegende Einrichtung die Aufgabe dadurch, dass sie
- die auf der Verbindung von einer Basisstation zu einer Steuerungseinheit übertragenen Sprachdaten mittels Systemidentifikation analysiert
- von einer Basisstation ausgehende und in derselben oder einer anderen mit der Einrichtung verbundenen Basisstation terminierten Verbindung diese Sprachkanäle in der Einrichtung zusammenschaltet
- nach dem Zusammenschalten dieser Sprachkanäle die Übertragung dieser Sprachdaten an die Steuerungseinheit unterbindet.

Die Analyse der Sprachdaten hat den Zweck, Sprachkanäle zu identifizierten auf welchen Sprachdaten übertragen werden die zu derselben Verbindung gehören.

Zur Identifikation zusammengehöriger Sprachkanäle stehen verschiedene mathematische Verfahren zur Verfügung. Geeignete Methoden sind sowohl die "Korrelationsanalyse" (beschrieben in Kap. 13.5, Stearns, S.D.; "Digitale Verarbeitung analoger Signale"; Oldenbourg, München&Wien 1984) oder auch die "Systemidentifikation" (beschrieben in Kap. 9, "Adaptive Signal Processing"; Widrow, B.; Stearns" S.D; Prentice-Hall, Englewood Cliffs, New Jersey, 1985).

Wird ein Paar an Sprachkanälen als zusammengehörig identifiziert, bedeutet das, dass die Verbindung von einem mobilen Endgerät initiiert wurde, welches an einer Basisstation angemeldet ist, die ihren Kommunikationskanal mit der ihr zugeordneten Steuerungseinheit über die erfindungsgemäße Einrichtung führt. Weiters ist mit erfolgreicher Identifikation erkannt, dass das zweite an der Verbindung beteiligte mobile Endgerät ebenso an einer Basisstation angemeldet ist, die ihren Kommunikationskanal mit der ihr zugeordneten, Steuerungseinheit über dieselbe erfindungsgemäße Einrichtung führt. Die erfindungsgemäße Einrichtung schaltet diese identifizierten Sprachkanälpaare daraufhin intern zusammen und unterbindet die Weiterleitung der auf diesen Sprachkanälen übertragenen Sprachdaten an die zugeordnete Steuerungseinheit.

Dadurch ist der Vorteil erzielbar, dass sobald die Einrichtung zwei zusammengehörige Sprachkanäle erkannt und in der Einrichtung verbunden hat, die auf diesen Sprachkanälen übertragenen Datenmengen nicht mehr an das restliche Mobilfunksystem weitergeleitet werden und damit die über die Schnittstelle zur Steuerungseinheit übertragenen Datenmengen reduziert werden.

Der Hauptaspekt der Erfindung ist, dass Verbindungen die innerhalb eines abgelegen positionierten Teils eines Mobilfunknetzes, welches mit einer erfindungsgemäßen Einrichtung ausgestattet ist, die Schnittstelle einer Steuerungseinheit nur mehr mit den unumgänglichen Signalisierungsdaten belasten. Diese Schnittstelle kann somit über einen Übertragungskanal mit niedriger Bandbreite geführt werden oder es können bei gleicher Bandbreite mehr Verbindungen gleichzeitig über diesen Kanal übertragen werden.

Eine vorteilhafte Ausgestaltung der Erfindung sieht vor, die Funktion in einem in die Schnittstellen zwischen einer oder mehrerer Basisstationen und deren Steuerungseinheit eingefügten Netzelement umzusetzen. Dadurch kann ein bestehendes Mobilfunknetz verbessert werden ohne bereits bestehende Netzelemente verändern zu müssen.

In weiterer günstiger Ausgestaltung der Erfindung empfiehlt sich, die Funktion in die Basisstation zu integrieren. Dadurch kann ein Netzelement so verändert werden, dass es die erfindungsgemäße Funktionalität besitzt. Dies ist besonders günstig, wenn zu einer Steuerungseinheit nur eine Basisstation zugeordnet ist.

In einer bevorzugten Fortbildung der Erfindung empfiehlt es sich, die Einrichtung so zu gestalten, dass sie unter Verwendung der durch sie geführten. Signalisierungsinformationen, welche bei jedem Gesprächsaufbau sowohl vom mobilen Endgerät, als auch vom Mobilfunknetz ausgetauscht werden, die Zeitpunkte an welchen ein Gespräch aufgebaut wird feststellt und die Analyse der Sprachkanäle erst daraufhin beginnt. Dadurch ist eine Reduktion der in der Einrichtung vorzuhaltenden Rechenleistung möglich.

### Rurzbeschreibung der Zeichnungen

Es zeigen beispielhaft:
**Fig.1** die Darstellung des prinzipiellen Aufbaus eines zellularen Mobilfunknetzes. Dargestellt sind die wesentlichen, von dieser Erfindung berührten Netzelemente Basisstation B und Steuerungseinheit S und eine Vermittlungseinheit V sowie die erfindungsgemäße Einrichtung E. Konkrete, im Einsatz befindliche Mobilfunknetze besitzen noch weitere, für diese Erfindung unerhebliche Netzelemente und sind an das öffentliche Telefonnetz angebunden. Der umrahmte Teil stellt die abgesetzt im Einsatz befindlichen Netzelemente dar.
**Fig. 2** die Darstellung einer erfindungsgemäßen Umsetzung nach Anspruch 3. Die der Erfindung zugrunde liegende Funktionalität ist in die Basisstation integriert.
**Fig. 3** ein Mobilfunknetz am Beispiel des GSM-Standards mit einer erfindungsgemäßen Einrichtung E im Zustand der Analyse der durch die Einrichtung E geleiteten Sprachkanäle.
**Fig. 4** ein Mobilfunknetz am Beispiel des GSM-Standards mit einer erfindungsgemäßen Einrichtung E im Zustand nach der Analyse der durch die Einrichtung E geleiteten Sprachkanäle, erfolgter Zusammenschaltung der Kanäle und unterbundener Weiterleitung der Sprachdaten an die Steuerungseinheit.

### Ausführung der Erfindung

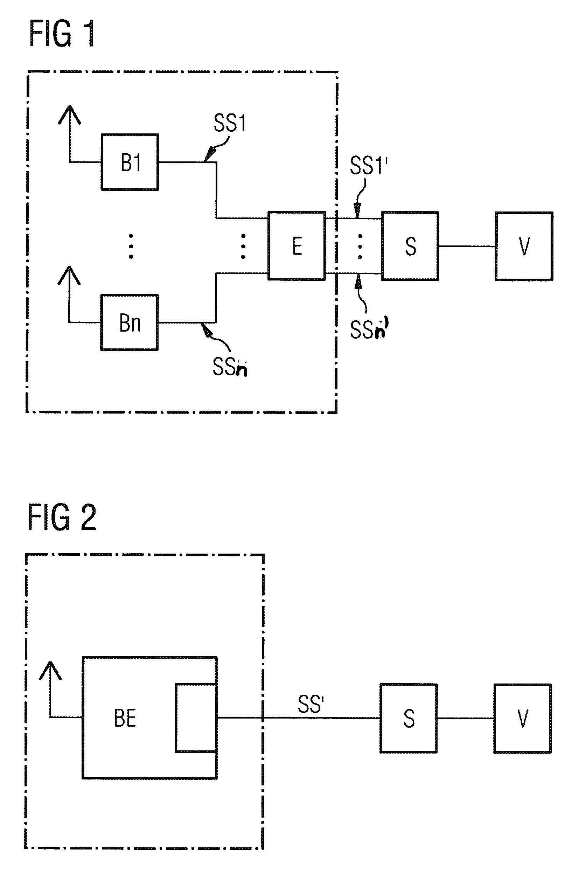

Fig. 1 zeigt die Darstellung des prinzipiellen Aufbaus eines zellularen Mobilfunknetzes im Falle der besonders ausgeprägten räumlichen Trennung der Netzelemente Basisstation B und Steuerungseinheit S, z.B. bei einem Einsatz in einem Flugzeug. Der umrahmte Teil stellt die abgesetzt im Einsatz befindlichen Netzelemente dar. Eine Steuerungseinheit S und eine zugehörige Vermittlungseinheit V bilden den Kern des Mobilfunknetzes. Die Vermittlungseinheit V ist in den meisten Fällen mit dem öffentliche Telefonnetz verbunden, dieses ist in Fig. 1 nicht dargestellt. Der Steuerungseinheit S sind eine oder mehrere Basisstationen B1..Bn zugeordnet, Diese Basisstationen B1..Bn sind mit der Steuerungseinheit S über die Schnittstellen SS1..SSn verbunden. Die erfindungsgemäße Einrichtung E ist im Signalweg der Schnittstellen SS1..SSn angeordnet. Der Teil der Verbindung einer Basisstation B zu der ihr zugeordneten Steuerungseinheit S, welcher zwischen der Basisstation B und der erfindungsgemäßen Einrichtung E liegt wird SS1..SSn genannt. Die auf diesem Abschnitt auftretenden Signale und Daten sind von der Einrichtung E unbeeinflusst. Der Teil der Verbindung einer Basisstation B zu der ihr zugeordneten Steuerungseinheit S, welcher zwischen der Steuerungseinheit S und der Einrichtung E liegt wird SS1'..SSn' genannt.

Während des Aufbaus einer Verbindung werden vom Mobilfunknetz Kanäle zur Sprachübertragung zwischen den an der Verbindung beteiligten Endgeräten M geschalten. Die Einrichtung E analysiert kontinuierlich mittels Systemidentifikation alle durch sie geleiteten Sprachübertragungskanäle, ob Sprachkanäle vorhanden sind, welche zu derselben Verbindung gehören. Das ist in allen Fällen gegeben, in welchen die an der Verbindung beteiligten Endgeräte M über Basisstationen B am Mobilfunknetz angemeldet sind, die jeweils ihre Kommunikationskanäle zu den ihnen zugeordneten Steuerungseinheiten S über die Einrichtung führen.

In Fig. 2 ist schematisch ein Mobilfunknetz im Falle der besonders ausgeprägten räumlichen Trennung der Netzelemente Basisstation B und Steuerungseinheit S dargestellt, welches im Gegensitz zu dem in Fig. 1 dargestellten Mobilfunknetz, nur eine Basisstation BE entfernt von der ihr zugeordneten Steuerungseinheit S beisitzt. Dabei ist die Funktionalität der erfindungsgemäßen Einrichtung E in die Basisstation B integriert.

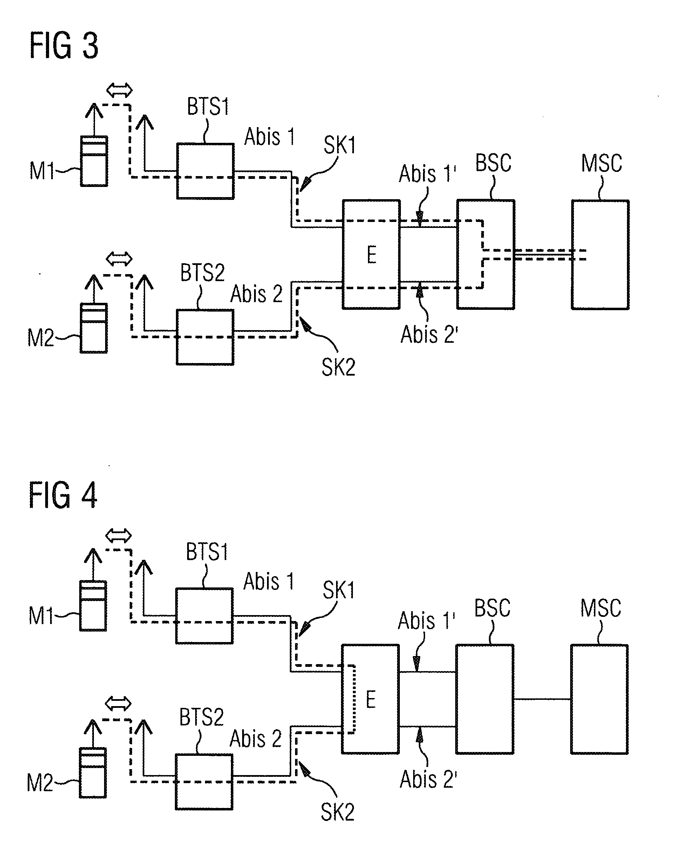

In Fig.3 ist schematisch am Beispiel eines GSM Netzes der Aufbau eines Mobilfunknetzes bei erfindungsgemäßer Anordnung der der Erfindung zugrunde liegenden Einrichtung E dargestellt. Die Basisstation B (welche im Falle, dass das Mobilfunknetz ein.GSM Netz ist, Base Transceiver Station BTS benannt wird) ist mit der Steuerungseinheit S (welche im Falle, dass das Mobilfunknetz ein GSM Netz ist Base Station Controller BSC benannt wird) verbunden. Im Verlauf dieser Verbindung liegen die erfindungsgemäße Einrichtung E und der Übertragungskanal über welchen die abgesetzt im Einsatz befindlichen Netzwerkelemente an das restliche Mobilfunknetz angebunden sind. Es ist wesentlich, dass die erfindungsgemäße Einrichtung 4 zwischen der Basisstation BTS und diesem Übertragungskanal angeordnet ist.

Das mobile Endgerät M1 führt eine Sprachverbindung zum mobilen Endgerät M2. Der Sprachkanal SK1 führt vom mobilen Endgerät M1 über die Basisstation BTS1, an welche das mobile Endgerät M1 angemeldet ist, über die erfindungsgemäße Einrichtung E, über die Steuerungseinheit BSC zur Vermittlungseinheit MSC. Der Sprachkanal SK2 führt vom mobilen Endgerät M2 über die Basisstation BTS2, an welche das mobile Endgerät M2 angemeldet ist, über die erfindungsgemäße Einrichtung E, über die Steuerungseinheit BSC zur Vermittlungseinheit MSC. In dieser Vermittlungseinheit MSC werden die Sprachkanäle SK1 und SK2 zusammengeschaltet und die mobilen Endgeräte M1 und M2 können somit Sprachdaten austauschen.

Fig. 4 stellt dasselbe Mobilfunknetz dar wie in Fig.3, ebenso bei einer bestehenden Sprachverbindung zwischen den mobilen Endgeräten M1 und M2. In diesem Fall ist der Zustand dargestellt, welcher sich nach erfolgreicher Identifikation der in Fig. 3 dargestellten Sprachkanäle SK1 und SK2 als von einer Verbindung stammenden und erfolgter Zusammenschaltung und Unterbindung der Weiterleitung der Sprachdaten an die Steuerungseinheit BSC darstellt. Die Schnittstellen Abis1', Abis2' und A sind um die Übertragung der Sprachdaten, welche aus der Verbindung vom mobilen Endgerät M1 zum mobilen Endgerät M2 anfallen, entlastet.

### Liste der Bezeichnungen

- B(n): Basisstation(en)
- E: Erfindungsgemäße Einrichtung
- S: Steuerungseinheit
- V: Vermittlungseinheit
- SS(n): Schnittstelle(n) zwischen Basisstation und erfindungsgemäßer Einrichtung
- SS(n)': Schnittstelle(n) zwischen erfindungsgemäßer Einrichtung und Steuerungseinheit
- BE: Basisstation mit integrierter Funktionalität der erfindungsgemäßen Einrichtung
- M(n): Mobile (s) Endgerät (e)
- BTS(n): Base Transceiver Station, Basisstation(en) im GSM Standard
- BSC: Base, Station Controller, Steuerungseinheit im GSM Standard
- MSC: Mobile Switching Center, Vermittlungseinheit im GSM Standard
- SK1: Sprachkanal 1
- SK2: Sprachkanal 2
- Abis: Schnittstelle zwischen BTS und BSC

## Patentansprüche

1. Verfahren zur Reduktion der zu übertragenden Datenmenge zwischen zumindest einer Basisstation (B) und einer Steuerungseinheit (S) in einem Mobilfunknetz bei dem in einen Kommunikationskanal (SS) zwischen der zumindest einen Basisstation (B) und der Steuerungseinheit(S), eine Einrichtung (E) eingefügt ist, mittels welcher
- die in jedem Kommunikationskanal (SS) übertragenen und einer Vielzahl von Verbindungen zugehörigen Sprachdaten mittels Systemidentifikation analysiert werden wobei
- jede Verbindung neben den in einem Sprachkanal (SK) geführten Sprachdaten auch Signalisierungsdaten in mindestens einem Signalisierungskanal umfasst und
- die von einer Basisstation (B) ausgehenden und in derselben oder einer anderen mit der Einrichtung (E) verbundenen Basisstation (B) terminierten Verbindungen identifiziert werden
- die Sprachkanäle dieser identifizierten Verbindungen in der Einrichtung zusammengeschaltet werden und
- nach dem Zusammenschalten dieser Sprachkanäle (SK) die Übertragung der zugehörigen Sprachdaten an die Steuerungseinheit (S) unterbunden wird.

2. Verfahren nach einem der Ansprüche 1 bis 3, **dadurch gekennzeichnet dass** als Mobilfunknetz ein Mobilfunknetz nach dem GSM Standard vorgesehen ist.

3. Verfahren nach einem der Ansprüche 1 bis 3, **dadurch gekennzeichnet dass** die Einrichtung (E) in einem Flugzeug angeordnet ist

4. Verfahren nach einem der Ansprüche 1 bis 3, **dadurch gekennzeichnet dass** die Einrichtung (E) in einem Schiff angeordnet ist.

5. Verfahren nach einem der Ansprüche 1 bis 3, **dadurch gekennzeichnet dass** die Einrichtung (E) räumlich abgelegen im geografischen Wirkungsbereich des Mobilfunksystemes angeordnet ist.

6. Verfahren nach einem der Ansprüche 1 bis 7, **dadurch gekennzeichnet, dass** die Einrichtung (E) zur Analyse der über sie geführten Sprachkanäle (SK) die mathematische Methode der Korrelationsanalyse angewandt wird.

7. Mobilfunksystem, umfassend eine Einrichtung (E), zumindest eine Basisstation (B) und eine Steuerungseinheit (S), wobei die Einrichtung (E) in einen Kommunikationskanal (SS) zwischen der zumindest einen Basisstation (B) und der Steuerungseinheit (S) eingefügt ist, und die Einrichtung (E) Mittel umfasst zur
- Analyse der in jedem Kommunikationskanal (SS) übertragenen und einer Vielzahl von Verbindungen zugehörigen Sprachdaten mittels Systemidentifikation
- Identifikation der von einer Basisstation (B) ausgehenden und in derselben oder einer anderen mit der Einrichtung (E) verbundenen Basisstation (B) terminierten Verbindungen
- Zusammenschaltung der Sprachkanäle (SK) dieser identifizierten Verbindungen in der Einrichtung (E) und
- Unterbindung der Übertragung der zugehörigen Sprachdaten an die Steuerungseinheit (S) nach dem Zusammenschalten dieser Sprachkanäle (SK).

8. Einrichtung zum Einsatz in einem Mobilfunksystem gemäß Anspruch 7, welche Mittel umfasst zur
- Analyse der in jedem Kommunikationskanal (SS) übertragenen und einer Vielzahl von Verbindungen zugehörigen Sprachdaten mittels Systemidentifikation
- Identifikation der von einer Basisstation (B) ausgehenden und in derselben oder einer anderen mit der Einrichtung (E) verbundenen Basisstation (B) terminierten Verbindungen
- Zusammenschaltung der Sprachkanäle (SK) dieser identifizierten Verbindungen in der Einrichtung (E) und
- Unterbindung der Übertragung der zugehörigen Sprachdaten an die Steuerungseinheit (S) nach dem Zusammenschalten dieser Sprachkanäle (SK).

## Claims

1. Method for reducing the volume of data to be transmitted between at least one base station (B) and a control unit (S) in a mobile communication network, wherein there is inserted into a communication channel (SS) between the at least one base station (B) and the control unit (S) a device (E) by means of which
- the voice data transmitted in each communication channel (SS) and associated with a plurality of connections is analysed by means of system identification, wherein
- in addition to the voice data routed in a voice channel (SK) each connection also includes signalling data in at least one signalling channel and
- the connections originating from a base station (B) and terminated in the same or a different base station (B) connected to the device (E) are identified,
- the voice channels of said identified connections are interconnected in the device (E) and
- after said voice channels (SK) have been interconnected the transmission of the associated voice data to the control unit (S) is inhibited.

2. Method according to one of claims 1 to 3, **characterised in that** a mobile communication network conforming to the GSM standard is provided as the mobile communication network.

3. Method according to one of claims 1 to 3,
**characterised in that** the device (E) is disposed in an aircraft.

4. Method according to one of claims 1 to 3, **characterised in that** the device (E) is disposed in a ship.

5. Method according to one of claims 1 to 3, **characterised in that** the device (E) is disposed in a physically remote location in the geographical coverage area of the mobile communication system.

6. Method according to one of claims 1 to 7, **characterised in that** in order to analyse the voice channels (SK) routed via it the device (E) applies the mathematical method of correlation analysis.

7. Mobile communication system comprising a device (E), at least one base station (B) and a control unit (S), wherein the device (E) is inserted into a communication channel (SS) between the at least one base station (B) and the control unit (S) and the device (E) comprises means for
- analysing the voice data transmitted in each communication channel (SS) and associated with a plurality of connections by means of system identification,
- identifying the connections originating from a base station (B) and terminated in the same or a different base station (B) connected to the device (E),
- interconnecting the voice channels (SK) of said identified connections in the device (E) and
- inhibiting the transmission of the associated voice data to the control unit (S) after said voice channels (SK) have been interconnected.

8. Device for use in a mobile communication system according to claim 7, the device comprising means for
- analysing the voice data transmitted in each communication channel (SS) and associated with a plurality of connections by means of system identification,
- identifying the connections originating from a base station (B) and terminated in the same or a different base station (B) connected to the device (E),
- interconnecting the voice channels (SK) of said identified connections in the device (E) and
- inhibiting the transmission of the associated voice data to the control unit (S) after said voice channels (SK) have been interconnected.

## Revendications

1. Procédé de réduction de la quantité de données à transmettre entre au moins un poste ( B ) de base et une unité ( F ) de commande dans un réseau de radiotéléphonie mobile, dans lequel il est inséré dans un canal ( SS ) de communication, entre le au moins un poste ( B ) de base et l'unité ( F ) de commande, un dispositif ( E ), au moyen duquel
- les données vocales transmises dans chaque canal ( SS ) de communication et appartenant à une pluralité de liaisons sont analysées au moyen d'une identification de système, dans lequel
- chaque liaison comprend, outre les données vocales qui passent dans un canal ( SK ) vocal, également des données de signalisation dans au moins un canal de signalisation et
- les liaisons partant d'un poste ( B ) de base et se terminant dans le même poste ( B ) de base ou dans un autre poste ( B ) de base relié au dispositif ( E ) sont identifiées
- les canaux vocaux de ces liaisons identifiées sont interconnectés dans le dispositif et
- après l'interconnexion de ces canaux ( SK ) vocaux, la transmission de données vocales associées à l'unité ( S ) de commande est supprimée.

2. Procédé suivant la revendication 1, **caractérisé en ce qu'**il est prévu comme réseau de téléphonie mobile un réseau de téléphonie mobile suivant la norme GSM.

3. Procédé suivant la revendication 1 ou 2, **caractérisé en ce que** le dispositif ( E ) est monté dans un avion.

4. Procédé suivant l'une des revendications 1 à 3, **caractérisé en ce que** le dispositif ( E ) est monté dans un bateau.

5. Procédé suivant l'une des revendications 1 à 3, **caractérisé en ce que** le dispositif ( E ) est disposé distribué dans l'espace dans la zone d'action géographique du système de radiotéléphonie mobile.

6. Procédé suivant l'une des revendications 1 à 5, **caractérisé en ce que** le dispositif ( E ) applique les méthodes mathématiques de l'analyse de corrélation pour l'analyse des canaux ( SK ) vocaux, qui passent par lui.

7. Système de radiotéléphonie mobile, comprenant un dispositif ( E ), au moins un poste ( B ) de base et une unité ( S ) de commande, dans lequel le dispositif ( E ) est inséré dans un canal ( SS ) de communication entre le au moins un procédé de base et l'unité ( S ) de commande et le dispositif (E) comprend des moyens pour
- l'analyse au moyen d'une identification de système des données vocales transmises dans chaque canal ( SS ) de communication et appartenant à une pluralité de liaisons
- une identification des liaisons partant d'un poste ( B ) de base et se terminant dans le même poste ( B ) de base ou dans un autre poste ( B ) de base relié au dispositif ( E )
- l'interconnexion des canaux ( SK ) vocaux de ces liaisons identifiées dans le dispositif ( E ) et
- la suppression de la transmission des données vocales associées à l'unité ( S ) de commande après l'interconnexion de ces canaux ( SK ) vocaux.

8. Dispositif à utiliser dans un système de radiotéléphonie mobile suivant la revendication 7, qui comprend des moyens pour
- l'analyse au moyen d'une identification de système des données vocales transmises dans chaque canal ( SS ) de communication et appartenant à une pluralité de liaisons
- une identification des liaisons partant d'un poste ( B ) de base et se terminant dans le même poste ( B ) de base ou dans un autre poste ( B ) de base relié au dispositif ( E )
- l'interconnexion des canaux ( SK ) vocaux de ces liaisons identifiées dans le dispositif ( E ) et
- la suppression de la transmission des données vocales associées à l'unité (S) de commande après l'interconnexion de ces canaux ( SK ) vocaux.
